# EUROPEAN PATENT APPLICATION

(11) **EP 4 531 258 A1**
(43) Date of publication of application: **02.04.2025**
(21) Application number: 22949034.7
(22) Date of filing: 25.10.2022
(51) Int. Cl.: H02M 1/38, H02M 1/088, H02M 7/42, H02M 7/5387, H02M 5/22, H02M 5/293

(54) **DC/AC CONVERSION CIRCUIT AND CONTROL METHOD THEREFOR, AND MODULATION METHOD FOR CYCLOCONVERTER**

(30) Priority: 01.07.2022 CN 202210766461
(71) Applicant: Hoymiles Power Electronics Inc., Hangzhou, Zhejiang 310015 (CN)
(72) Inventor: SHI, Keyan, Hangzhou, Zhejiang 310015 (CN); YU, Hongbin, Hangzhou, Zhejiang 310015 (CN); ZHAO, Yi, Hangzhou, Zhejiang 310015 (CN); YANG, Bo, Hangzhou, Zhejiang 310015 (CN)
(74) Representative: Meyer-Dulheuer MD Legal Patentanwälte PartG mbB
(86) International application number: PCT/CN2022/127250
(87) International publication number: WO 2024/000949

(57) **Abstract**

A DC/AC conversion circuit and a control method therefor, and a modulation method for a cycloconverter are provided. The circuit includes: an inverter unit (101) configured for converting a direct current into an alternating current; at least one cycloconverter (102), which includes a plurality of sets of switching elements, the plurality of sets of switching elements are connected to an output port of the inverter unit (101) respectively and configured for performing AC-to-AC conversion, and an output port of the at least one cycloconverter (102) is configured to connect to a power grid and provide an alternating current output; and a controller (103) connected to the inverter unit (101) and the at least one cycloconverter (102) respectively and configured for controlling, when a grid voltage is within a threshold range, corresponding two sets of switching elements among the plurality of sets of switching elements to complementarily turn on.

## Description

### CROSS-REFERENCE TO RELATED APPLICATION

This application claims priority to Chinese patent application No. 202210766461.4, filed on July 1, 2022, titled "DC/AC CONVERSION CIRCUIT AND CONTROL METHOD THEREFOR, AND MODULATION METHOD FOR CYCLOCONVERTER", the content of the above identified application is hereby incorporated herein in its entirety by reference.

### TECHNICAL FIELD

The present invention generally relates to the field of inverters, and in particular, to a DC/AC conversion circuit and a control method therefor, and a modulation method for a cycloconverter.

### BACKGROUND

A DC (direct current) /AC (alternating current) conversion circuit is widely applied in grid-connected power conversion applications, such as renewable energy power generation, energy storage system, and electric vehicle charging. When a DC voltage is low, a two-stage conversion circuit is usually required to implement an inverter function. A former DC/DC conversion circuit is applied to boost the low DC voltage to a high DC voltage, then the high DC voltage is provided to a latter bridge DC/AC inverter circuit for inversion. An isolated DC/AC conversion circuit based on a cycloconverter can reduce the number of circuit stages, and the power conversion from the low DC voltage to an AC voltage can be achieved with one-stage circuit, thereby reducing circuit complexity.

Due to a distortion of a zero crossing of a grid voltage, sampling and filtering of the grid voltage, control delay, and the like, a controller cannot obtain an accurate time of the zero crossing of the grid voltage, and a polarity change of the grid voltage may cause a short-circuit risk in a bridge arm of the cycloconverter.

### SUMMARY

According to various embodiments of the present invention, a DC/AC conversion circuit and a control method therefor, and a modulation method for a cycloconverter are provided.

In a first aspect, a DC/AC conversion circuit is provided, including an inverter unit, at least one cycloconverter, and a controller. The inverter unit is configured for converting a direct current into an alternating current. The at least one cycloconverter is connected to the inverter unit, the cycloconverter includes a plurality of sets of switching elements, the plurality of sets of switching elements are connected to an output port of the inverter unit respectively and configured for performing AC-to-AC conversion, and an output port of the cycloconverter is configured to connect to a power grid and provide an alternating current output. Each of the plurality of sets of switching elements includes at least two switching elements which are connected in reverse. The controller is connected to the inverter unit and the cycloconverter and is configured for controlling, when a grid voltage is within a threshold range, corresponding two of the plurality of sets of switching elements to complementarily turn on. The threshold range includes a zero crossing.

In an embodiment, when the grid voltage is within the threshold range, the controller is configured for controlling the corresponding two of the plurality of sets of switching elements to turn on or off at a high switching frequency.

In an embodiment, when the grid voltage is within the threshold range, the controller is configured for controlling switching elements in each of the corresponding two of the plurality of sets of switching elements to turn on or off simultaneously.

In an embodiment, a dead time is set between any two sets of switching elements.

In an embodiment, the controller includes a hysteresis comparison unit, the hysteresis comparison unit is configured to compare the grid voltage with a first threshold and a second threshold respectively and control an operating state of the cycloconverter according to a comparison result. The first threshold and the second threshold are determined based on the threshold range.

In an embodiment, a set of switching elements of the cycloconverter includes a first switching element and a second switching element, another set of switching elements of the cycloconverter includes a third switching element and a fourth switching element, and the first switching element, the second switching element, the third switching element, and the fourth switching element are connected in series between two output terminals of the cycloconverter.

In an embodiment, the cycloconverter includes three sets of switching elements which are configured to provide a three-phase alternating current output, a first set of switching elements includes a first switching element and a second switching element, a second set of switching elements includes a third switching element and a fourth switching element, a third set of switching elements includes a fifth switching element and a sixth switching element, and any two of the three sets of switching elements are connected in series between corresponding two output terminals of the cycloconverter.

In an embodiment, each of the plurality of sets of switching elements includes a first switching element and a second switching element, when the grid voltage is in a positive half-cycle or a negative half-cycle and is not in the threshold range, one of the first switching element and the second switching element is controlled to be in an always-on state, and the other one of the first switching element and the second switching element is controlled to turn on or off at a high switching frequency.

In an embodiment, the circuit further includes a transformer, the inverter unit is connected to a primary side of the transformer, and the cycloconverter is connected to a secondary side of the transformer.

In an embodiment, the circuit further includes at least one resonant unit connected in series to the secondary side of the transformer, and an output terminal of the resonant unit is connected to a corresponding cycloconverter.

In an embodiment, the circuit further includes a filter unit. The filter unit is connected to an output port of the cycloconverter, and configured to filter the alternating current output of the cycloconverter.

In a second aspect, a modulation method for a cycloconverter is further provided. The cycloconverter includes a plurality of sets of switching elements, each of the plurality of sets of switching elements includes at least two switching elements which are connected in reverse, an output port of the cycloconverter is configured to connect to a power grid and provide an alternating current output, and the method includes: when a grid voltage is within a threshold range, controlling corresponding two of the plurality of sets of switching elements to complementarily turn on. The threshold range includes a zero crossing.

In an embodiment, the method further includes: when the grid voltage is within the threshold range, controlling the corresponding two of the plurality of sets of switching elements to turn on or off at a high switching frequency.

In an embodiment, the method further includes: when the grid voltage is within the threshold range, controlling switching elements in each of the corresponding two of the plurality of sets of switching elements to turn on or off simultaneously.

In a third aspect, a control method of a DC/AC conversion circuit is further provided and configured to control the DC/AC conversion circuit in the first aspect. The method includes: when the grid voltage is within the threshold range, controlling the corresponding two of the plurality of sets of switching elements to complementarily turn on. The threshold range includes the zero crossing.

In an embodiment, the method further includes: when the grid voltage is within the threshold range, controlling the corresponding two of the plurality of sets of switching elements to turn on or off at a high switching frequency.

In an embodiment, the method further includes: when the grid voltage is within the threshold range, controlling switching elements in each of the corresponding two of the plurality of sets of switching elements to turn on or off simultaneously.

Details of one or more embodiments of the present invention are proposed in the following accompanying drawings and descriptions, so that other features, objects, and advantages of the present invention are more easily understood.

### BRIEF DESCRIPTION OF THE DRAWINGS

In order to more clearly describe and illustrate embodiments and/or examples of the present invention, reference may be made to one or more accompanying drawings. Additional details or examples used to describe the accompanying drawings should not be construed as limiting the scope of any one of the present invention, presently described embodiments and/or examples, and the best pattern of the present invention as understood.
FIG. 1 is a first schematic diagram of a DC/AC conversion circuit in an embodiment of the present invention.
FIG. 2 is a second schematic diagram of a DC/AC conversion circuit in an embodiment of the present invention.
FIG. 3 is a third schematic diagram of a DC/AC conversion circuit in an embodiment of the present invention.
FIG. 4 is a fourth schematic diagram of a DC/AC conversion circuit in an embodiment of the present invention.
FIG. 5 is a schematic circuit diagram of a DC/AC conversion circuit in a first embodiment of the present invention.
FIG. 6 is a schematic diagram of a drive signal when a grid voltage is in a positive half-cycle in an embodiment of the present invention.
FIG. 7 is a schematic diagram of a drive signal when a grid voltage is in a negative half-cycle in an embodiment of the present invention.
FIG. 8 is a schematic diagram of a short circuit in a DC/AC conversion circuit in an embodiment of the present invention.
FIG. 9 is a schematic diagram of a drive signal when a grid voltage is within a threshold range in an embodiment of the present invention.
FIG. 10 is a schematic diagram of a first operating state of a cycloconverter in a DC/AC conversion circuit in an embodiment of the present invention.
FIG. 11 is a schematic diagram of a second operating state of a cycloconverter in a DC/AC conversion circuit in an embodiment of the present invention.
FIG. 12 is a schematic timing diagram of a drive logic of a cycloconverter in an embodiment of the present invention.
FIG. 13 is a schematic circuit diagram of a DC/AC conversion circuit in a second embodiment of the present invention.
FIG. 14 is a schematic circuit diagram of a DC/AC conversion circuit in a third embodiment of the present invention.
FIG. 15 is a schematic circuit diagram of a DC/AC conversion circuit in a fourth embodiment of the present invention.
FIG. 16 is a schematic circuit diagram of a DC/AC conversion circuit in a fifth embodiment of the present invention.

### DETAILED DESCRIPTION OF THE EMBODIMENT

To make objects, technical solutions, and advantages of the present invention clearer, the following describes and illustrates the present invention with reference to the accompanying drawings and embodiments. It should be understood that the specific embodiments described herein are merely used to explain the present invention, and are not intended to limit the present invention. Based on the embodiments provided in the present invention, all other embodiments obtained by one skilled in the art without creative efforts fall within a protection scope of the present invention. In addition, it may be further understood that, although efforts made in this development process may be complex and lengthy, for one skilled in the art related to the content disclosed in the present invention, some changes such as design, manufacture, or production based on the technical content disclosed in the present invention are merely conventional technical means, and should not be understood as insufficient content disclosed in the present invention.

The reference to "embodiment" in the present invention means that a specific feature, a structure, or a characteristic described with reference to the embodiment may be included in at least one embodiment of the present invention. The phrase "embodiment" appears at various locations in the description does not necessarily refer to a same embodiment, nor is it a separate or alternative embodiment mutually exclusive with another embodiment. One skilled in the art may explicitly and implicitly understand that the embodiment described in the present invention may be combined with other embodiments without conflict.

Unless defined otherwise, technical terms or scientific terms involved in the present invention have the same meanings as would generally understood by one skilled in the technical field of the present invention. In the present invention, "a", "an", "one", "the", and other similar words do not indicate a quantitative limitation, which may be singular or plural. The terms such as "comprise", "include", "have", and any variants thereof involved in the present invention are intended to cover a non-exclusive inclusion. For example, processes, methods, systems, products, or devices including a series of steps or modules (units) are not limited to these steps or modules (units) listed, and may include other steps or modules (units) not listed, or may include other steps or modules (units) inherent to these processes, methods, systems, products, or devices. Words such as "join", "connect", "couple", and the like involved in the present invention are not limited to physical or mechanical connections, and may include electrical connections, whether direct or indirect. "A plurality of" involved in the present invention means two or more. The term "and/or" describes an association relationship between associated objects and represents that three relationships may exist. For example, A and/or B may represent the following three cases: only A exists, both A and B exist, and only B exists. The terms "first", "second", "third", and the like involved in the present invention are only intended to distinguish similar objects and do not represent specific ordering of the objects.

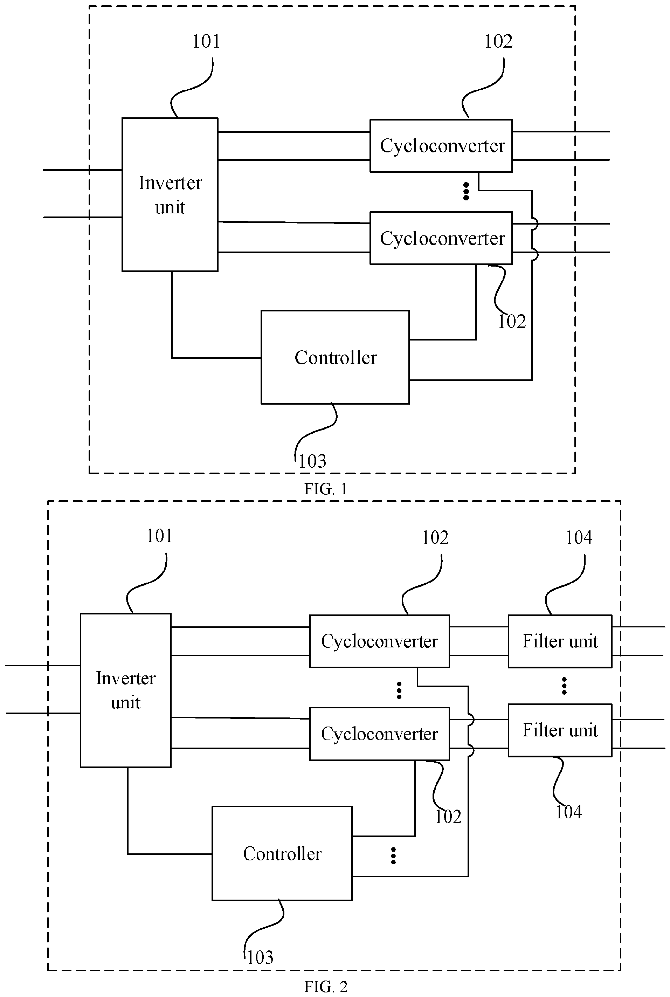

FIG. 1 is a first schematic diagram of a DC/AC conversion circuit in an embodiment of the present invention. The DC/AC conversion circuit includes an inverter unit 101, at least one cycloconverter 102, and a controller 103. The inverter unit 101 is configured for converting a direct current into an alternating current. The at least one cycloconverter 102 is connected to the inverter unit 101, the cycloconverter 102 includes a plurality of sets of switching elements, the plurality of sets of switching elements are connected to an output port of the inverter unit 101 respectively and configured for performing AC-to-AC conversion, and an output port of the at least one cycloconverter 102 is configured to connect to a power grid and provide an alternating current output. Each of the plurality of sets of switching elements includes at least two switching elements which are connected in reverse. The controller 103 is connected to the inverter unit 101 and the at least one cycloconverter 102 and is configured for controlling, when a grid voltage is within a threshold range, corresponding two of the plurality of sets of switching elements to complementarily turn on. The threshold range includes a zero crossing.

Exemplarily, the at least one cycloconverter 102 is configured to convert a highfrequency alternating current into a power-frequency alternating current.

The quantity of the at least one cycloconverter 102 may be set according to a practical requirement. The quantity of sets of switching elements of the cycloconverter 102 may be determined by the quantity of phases of the alternating current output. In an embodiment, when a three-phase alternating current output needs to be provided, the cycloconverter 102 may need three sets of switching elements.

In an embodiment, when the cycloconverter 102 outputs a single-phase alternating current and the grid voltage is within the threshold range, the two sets of switching elements may be controlled to complementarily turn on.

In another embodiment, when the cycloconverter 102 outputs a multi-phase alternating current and any phase voltage of the grid voltage is within the threshold range, the two sets of switching elements corresponding to the phase voltage may be controlled to complementarily turn on.

When the DC/AC conversion circuit is connected to the power grid, considering that when the grid voltage is crossing zero, if the drive logic of the positive half-cycle and the drive logic of the negative half-cycle of the cycloconverter are not switched in time, a short-circuit risk may be caused between output terminals of the cycloconverter. In the present embodiment, when the grid voltage is within a threshold range, the controller 103 may control the corresponding two of the plurality of sets of switching elements to complementarily turn on. The threshold range includes the zero crossing, so that the short circuit is not caused in the cycloconverter.

The threshold range may be set according to a practical requirement. Specifically, the threshold range may be a range between a positive threshold and a negative threshold which are near the zero crossing. Generally, absolute values of the positive threshold and the negative threshold may be same.

In some application scenarios where a grid voltage distortion is serious, if a grid voltage waveform is distorted at a zero crossing, the grid voltage may frequently cross zero for many times near the zero crossing. The drive logic of the switching elements in the positive half-cycle and the negative half-cycle of the grid voltage may be different, so that the drive logic may jump between the drive logic of the positive half-cycle and the drive logic of the negative half-cycle quickly and frequently, thus easily introducing interference to a system, and causing distortion of a power or a grid-connected current waveform at the zero crossing. In the present embodiment, when the grid voltage is within the threshold range near the zero crossing, the drive logic of synchronous switching may be applied, i.e., when the grid voltage is within the threshold range, the controller 103 controls the corresponding two of the plurality of sets of switching elements to complementarily turn on, and no frequent jumping between the drive logic of the positive half-cycle and the drive logic of the negative half-cycle may exist, thereby solving the foregoing technical problem.

Furthermore, when the grid voltage is within the threshold range, the controller 103 is configured for controlling the corresponding two of the plurality of sets of switching elements to turn on or off at a high switching frequency. The high switching frequency may be any frequency greater than a frequency of the grid voltage.

Furthermore, when the grid voltage is within the threshold range, the controller 103 is configured for controlling switching elements in each of the corresponding two of the plurality of sets of switching elements to turn on or off simultaneously, to avoid the short circuit between the output terminals of the cycloconverter.

Furthermore, a dead time may be set between any two sets of switching elements of the cycloconverter, to prevent a bridge between the output terminals of the cycloconverter from shoot through. The dead time may be set according to a practical requirement.

In an embodiment, the controller 103 may include a hysteresis comparison unit, the hysteresis comparison unit is configured to compare the grid voltage with a first threshold and a second threshold respectively and control an operating state of the at least one cycloconverter according to a comparison result. The first threshold and the second threshold may be determined based on the threshold range. By setting a hysteresis comparison function, the drive logic may be prevented from being switched multiple times near the first threshold and the second threshold.

It is assumed that the threshold range is [-vth, +vth], the first threshold is opposite to and the second threshold, the first threshold may be -vth, the second threshold may be +vth, or the first threshold and the second threshold may be two thresholds near -vth and +vth, respectively.

In some embodiments, the inverter unit 101 may be a current-type inverter circuit or a voltage-type inverter circuit.

In some embodiments, see FIG. 2, the DC/AC conversion circuit may further include a filter unit 104. The filter unit 104 may be connected to an output port of the cycloconverter 102 and configured to filter the alternating current output of the cycloconverter 102.

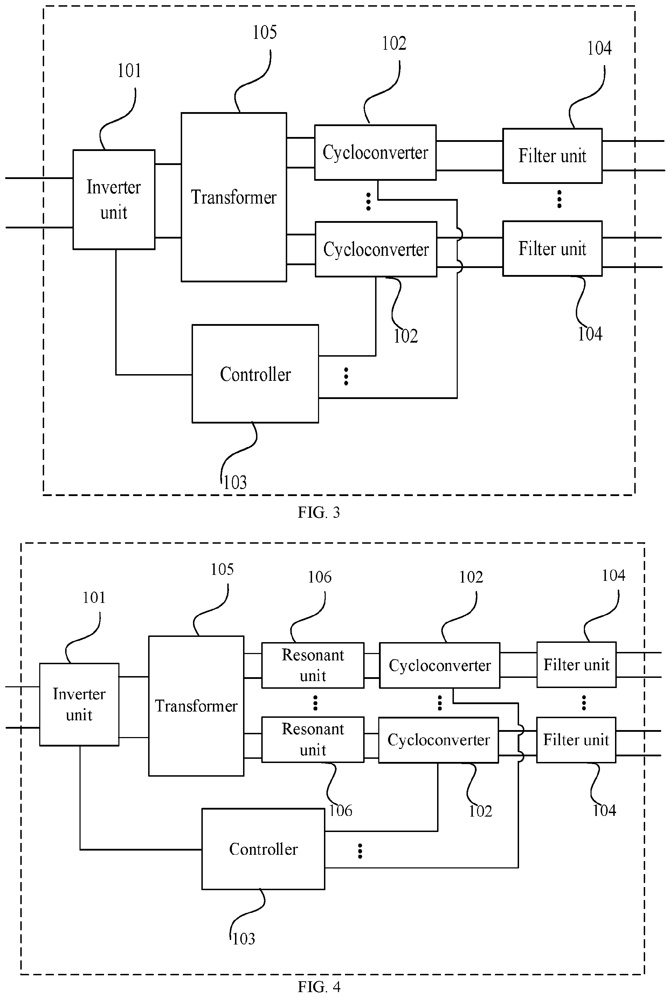

In some embodiments, referring to FIG. 3, the DC/AC conversion circuit may further include a transformer 105. The transformer 105 is configured for boosting and electrical isolation. The inverter unit 101 may be connected to a primary side of the transformer 105, and the cycloconverter 102 may be connected to a secondary side of the transformer 105. Exemplarily, the quantity of secondary windings of the transformer 105 is same as that of the cycloconverters 102.

In an embodiment, referring to FIG. 4, the DC/AC conversion circuit may further include at least one resonant unit 106. An output terminal of the resonant unit may be connected to a corresponding cycloconverter.

The resonant unit 106 is configured for the soft switching of the switching elements in the DC/AC conversion circuit, thereby reducing circuit losses.

The resonant unit 106 may be connected between the primary side of the transformer 105 and the inverter unit 101, and the circuit form of the resonant unit 106 may be a single L (Inductor), an LC (Inductor-Capacitor), a CLLC (Capacitor-Inductor-Inductor-Capacitor), or the like.

When the grid voltage is not within the threshold range, the controller 103 may implement AC-to-AC conversion by controlling a duty cycle and a phase difference of on signals of the switching elements in the plurality of sets of switching elements.

Furthermore, when the grid voltage is in the positive half-cycle or the negative half-cycle, the controller 103 may control an operating state of a corresponding switching element by corresponding drive logic, to control a corresponding cycloconverter 102 to keep a freewheeling state, thereby effectively reducing a voltage stress of the switching element.

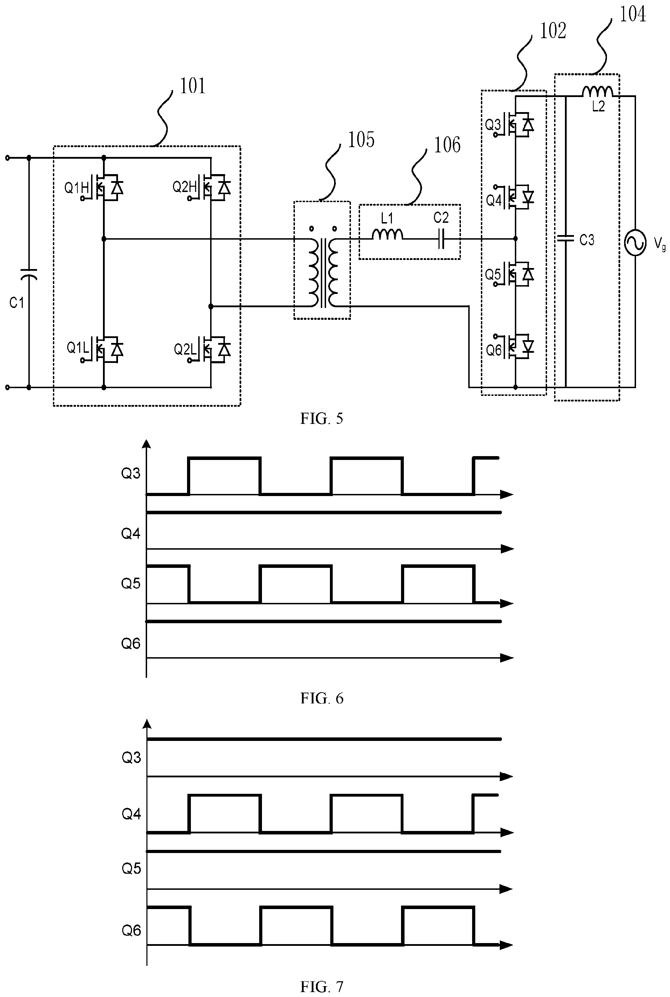

In a first embodiment, referring to FIG. 5, the inverter unit 101 of the DC/AC conversion circuit may use an H-bridge, and an input port of the inverter unit 101 may be connected to a capacitor C1 in parallel. The inverter unit 101 may include a switch Q1H, a switch Q1L, a switch Q2H, and a switch Q2L. A cycloconverter 102 may include two sets of switching elements, the two sets of switching elements are connected in series, and the switching elements in each set of switching elements are connected in a common source connection manner. Specifically, the two sets of switching elements may be connected in series between two output terminals of the cycloconverter 102 to form a bridge arm. A first set of switching elements of the cycloconverter 102 may include a switch Q3 and a switch Q4 having a common source connection, a second set of switching elements of the cycloconverter 102 may include a switch Q5 and a switch Q6 having a common source connection, the two sets of switching elements may be commonly connected to a middle point of the bridge arm, the output port of the cycloconverter 102 may be connected to an alternating current grid Vg via the filter unit 104, and the filter unit 104 may include a capacitor C3 connected to the output port of the cycloconverter 102 in parallel and an inductor L2 connected to a first output terminal of the cycloconverter 102. A second output terminal of the cycloconverter 102 may be connected to a terminal of a secondary winding of the transformer 105, and the other terminal of the secondary winding of the transformer 105 may be connected to the middle point of the bridge arm of the cycloconverter 102 via a resonant unit 106. The resonant unit 106 may include an inductor L1 and a capacitor C2 which are connected in series.

Specifically, drive signals of the switching elements of the cycloconverter 102 when the grid voltage is in the positive half-cycle may refer to FIG. 6, and drive signals of the switching elements of the cycloconverter 102 when the grid voltage is in the negative half-cycle may refer to FIG. 7. The switch Q1H and the switch Q1L of the inverter unit 101 may operate complementarily with a duty cycle of 50%, the switch Q2H and the switch Q2L of the inverter unit 101 may operate complementarily with a duty cycle of 50%, and an output voltage of the inverter unit 101 may be controlled by controlling a phase shift between two half bridges. When the grid voltage is in the positive half-cycle and not within the threshold range, the cycloconverter 102 may apply the drive logic of the positive half-cycle, i.e., the switch Q4 and the switch Q6 may keep an always-on state, the switch Q3 and the switch Q5 may operate complementarily with the duty cycle of 50%, for example, and the dead time of driving signals may be, for example, Td. When the grid voltage is in the negative half-cycle and not within the threshold range, the cycloconverter 102 may apply the drive logic of the negative half-cycle, i.e., the switch Q3 and the switch Q5 may in the always-on state, the switch Q4 and the switch Q6 may operate complementarily with the duty cycle of 50%, for example. The inverter unit 101 may be controlled to implement inversion and the cycloconverter 102 may be controlled to implement AC-to-AC conversion by the foregoing drive logic, and the power conversion from direct current to alternating current is achieved finally.

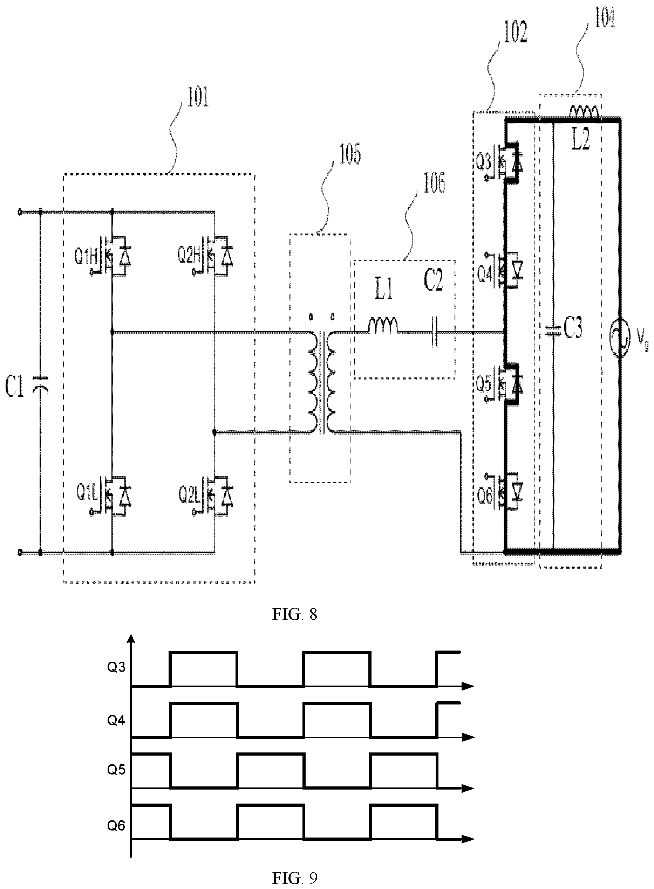

When the grid voltage vg is crossing zero and the drive logic of the positive half-cycle and the drive logic of the negative half-cycle of the cycloconverter 102 are not switched in time, a short-circuit risk may be caused between the output terminals of the cycloconverter 102. Referring to FIG. 8, the bridge arm of the cycloconverter 102 operates under the drive logic of positive half-cycle, the grid voltage vg is changed suddenly to be negative voltage, and the drive logic may not be switched in time, causing shoot through in the bridge arm between the output terminals of the cycloconverter 102.

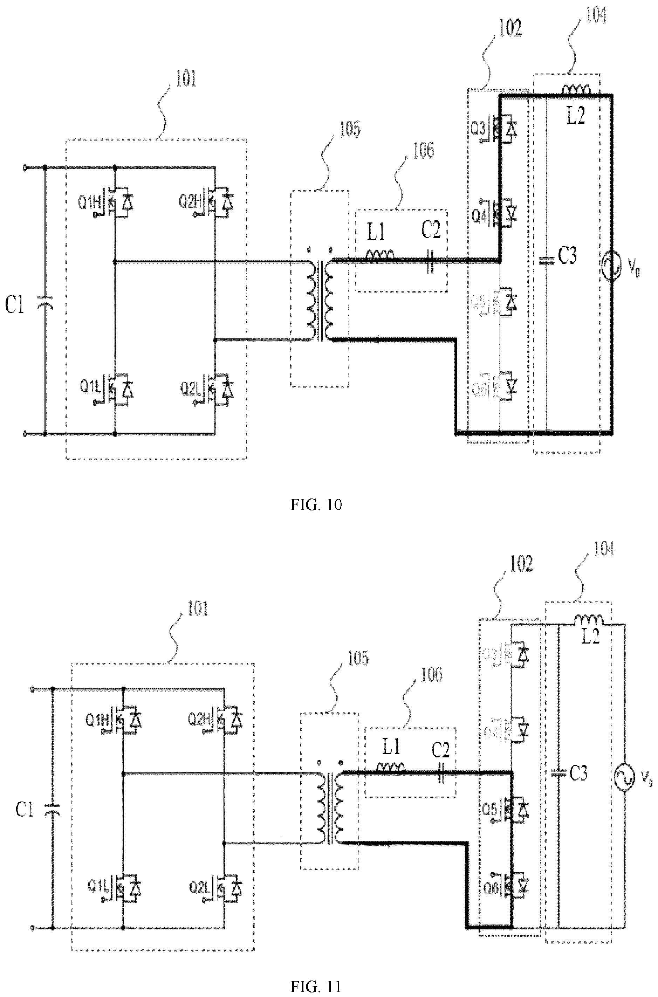

To solve the above problem, when the grid voltage is between the two thresholds, i.e., within the threshold range, the drive logic of synchronous switching may be applied. In other words, the controller 103 may control the switch Q3 and the switch Q4 to turn on or off synchronously, and control the switch Q5 and the switch Q6 to turn on or off synchronously, and the two sets of switches may be turned on complementarily, referring to FIG. 9. When the switch Q3 and the switch Q4 are turned on, and the switch Q5 and the switch Q6 are turned off, an operating status of the cycloconverter 102 may refer to FIG. 10. When the switch Q3 and the switch Q4 are turned off, and the switch Q5 and the switch Q6 are turned on, the operating status of the cycloconverter 102 may refer to FIG. 11. In the two states, output voltages of the cycloconverter 102 may be the grid voltage vg and 0 respectively, which is consistent with a normal output voltage in the positive half-cycle or in the negative half-cycle of the power grid. Since there is always one set of switches having a common source connection that is in an off state, positive and negative voltages may be blocked, thereby avoiding the shoot through in the bridge arm between the output terminals. Therefore, there is no short-circuit path between the output terminals of the cycloconverter 102.

In the DC/AC conversion circuit of the present invention, when the grid voltage is within the threshold range, the corresponding two of the plurality of sets of switching elements may be controlled to be turned on complementarily. Therefore, there is no case that two sets of switching elements between the two output terminals are tuned on at the same time at any moment, thereby effectively avoiding a short-circuit risk in the bridge arm between the output terminals of the cycloconverter caused by a voltage distortion near the zero crossing of the grid voltage, and improving reliability of the DC/AC conversion circuit.

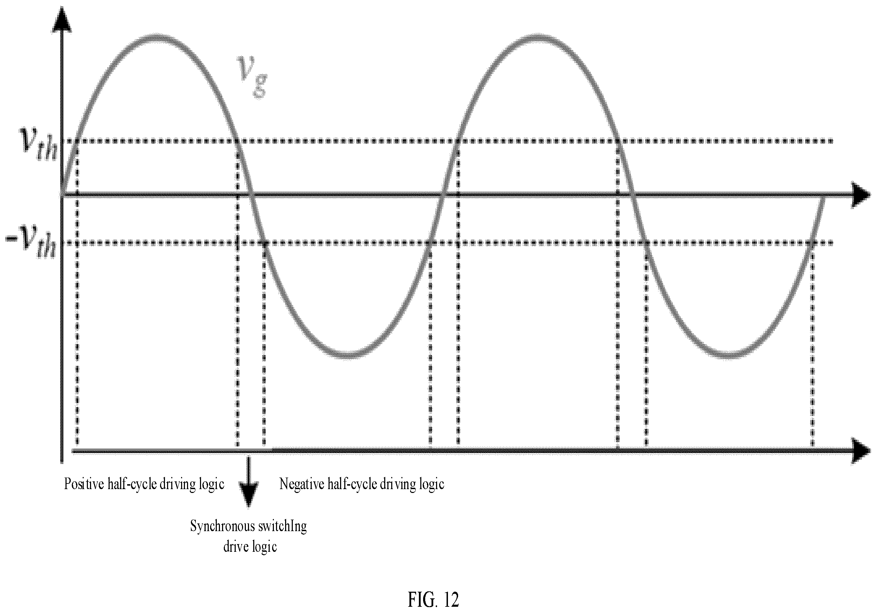

In conclusion, FIG. 12 shows a schematic timing diagram of drive logic of the cycloconverter in an embodiment of the present invention. Referring to FIG. 12, when the grid voltage vg is greater than the threshold +vth, the drive logic of the positive half-cycle may be applied, when the grid voltage vg is less than the threshold -vth, the drive logic of the negative half-cycle may be applied, when the grid voltage vg is within the threshold range [-vth, +vth], the drive logic of synchronous switching may be applied, so as to achieve the driving of the switch throughout a cycle of the grid voltage.

In some embodiments, the cycloconverter 102 may include at least two bridge arms, and each bridge arm is formed by two sets of switching elements connected in series between the output terminals of the cycloconverter 102, the at least two bridge arms may be connected in parallel, a terminal of a secondary winding of a transformer 105 may be connected to a middle point of a bridge arm via a resonant unit 106, and the other terminal of the secondary winding of the transformer 105 may be connected to a middle point of another bridge arm. When the grid voltage is between the two thresholds, i.e., within the threshold range, the two sets of switching elements in the same bridge arm may be turned on complementarily. The drive logic of synchronous switching may be applied, i.e., switching elements of each of the two sets of switching elements may be controlled to turn on or off simultaneously, and turn on or off at the high switching frequency. When the grid voltage is in the positive half-cycle or the negative half-cycle and not within the threshold range, a switching element of each of the two sets of switching elements may be controlled to be in the always-on state, and the other switching element of the same set of switching elements may be controlled to turn on or off at the high switching frequency.

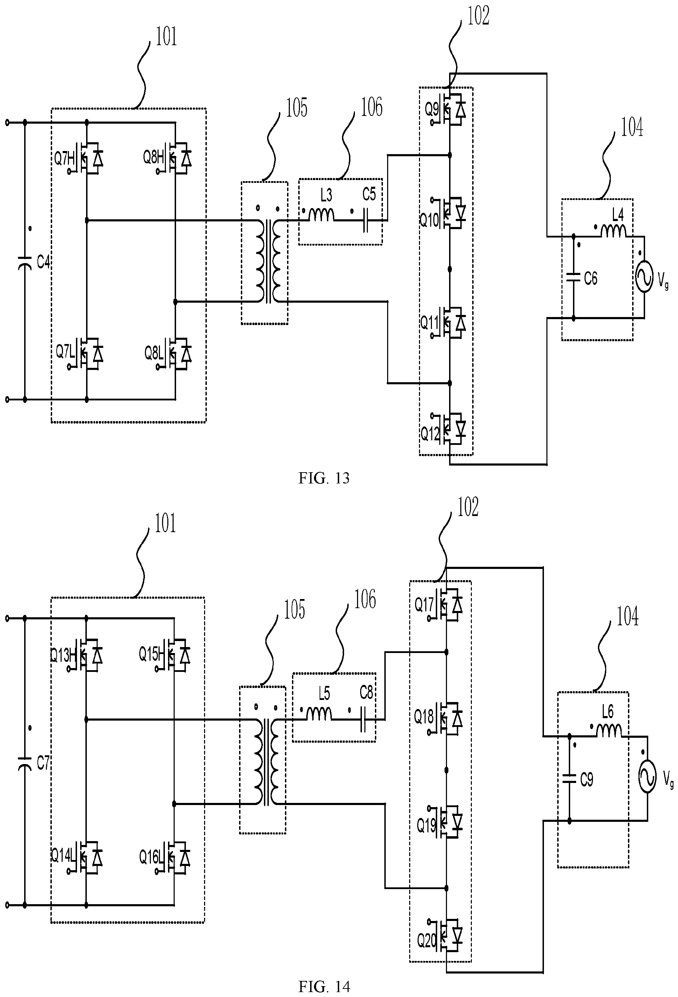

In a second embodiment, referring to FIG. 13, an input port of the inverter unit 101 of the DC/AC conversion circuit may be connected to a capacitor C4 in parallel, and the inverter unit 101 may include a switch Q7H, a switch Q7L, a switch Q8H, and a switch Q8L. A terminal of a secondary winding of a transformer 105 may be connected to a cycloconverter 102 via a resonant unit 106, and the resonant unit 106 may include an inductor L3 and a capacitor C5 connected in series. A first set of switching elements of the cycloconverter 102 may include a switch Q9 and a switch Q10 having a common source connection, and a second set of switching elements of the cycloconverter 102 may include a switch Q11 and a switch Q12 having a common source connection. The two sets of the switch elements may be connected to a middle point of a bridge arm, respectively. Compared with the first embodiment, a terminal of a secondary winding of a transformer 105 may be connected to a middle point between the switch Q9 and the switch Q10 via a resonant unit 106, and the other terminal of the secondary winding of the transformer 105 may be connected to a middle point between the switch Q11 and the switch Q12. The output port of the cycloconverter 102 may be connected to the alternating current grid Vg via a filter unit 104, and the filter unit 104 may include a capacitor C6 connected to the output port of the cycloconverter 102 in parallel and an inductor L4 connected to a first output terminal of the cycloconverter 102.

When the grid voltage is in the positive half-cycle and not within the threshold range, the cycloconverter 102 may apply the drive logic of the positive half-cycle, i.e., the switch Q10 and the switch Q12 may be in the always-on state, the switch Q9 and the switch Q11 may operate complementarily with a duty cycle of 50%, and the dead time may be, for example, Td. When the grid voltage is in the negative half-cycle and not within the threshold range, the cycloconverter 102 may apply the drive logic of the negative half-cycle, i.e., the switch Q9 and the switch Q11 may be in the always-on state, the switch Q11 and the switch Q12 may operate complementarily with a duty cycle of 50%. When the grid voltage is between the two thresholds, i.e., within the threshold range, the drive logic of synchronous switching may be applied. In other words, the controller 103 may control the switch Q9 and the switch Q10 to turn on or off synchronously, and control the switch Q11 and the switch Q12 to turn on or off synchronously, and the two sets of switches may be turned on complementarily.

In a third embodiment, referring to FIG. 14, an input port of the inverter unit 101 of the DC/AC conversion circuit may be connected to a capacitor C7 in parallel, and the inverter unit 101 may include a switch Q13H, a switch Q14L, a switch Q15H, and a switch Q16L. A terminal of a secondary winding of a transformer 105 may be connected to a cycloconverter 102 via a resonant unit 106, and the resonant unit 106 may include an inductor L5 and a capacitor C8 connected in series. Compared with the second embodiment, a first set of switching elements of the cycloconverter 102 may include a switch Q18 and a switch Q19 having a common source connection, and a second set of the cycloconverter 102 may include a switch Q17 and a switch Q20 that are connected in anti-series via the first set of switching elements. A drain of the switch Q18 may be connected to a source of the switch Q17, and a drain of the switch Q19 may be connected to a source of the switch Q20. The output port of the cycloconverter 102 may be connected to the alternating current grid Vg via a filter unit 104, and the filter unit 104 may include a capacitor C9 connected to the output port of the cycloconverter 102 in parallel and an inductor L6 connected to a first output terminal of the cycloconverter 102.

When the grid voltage is in the positive half-cycle and not within the threshold range, the cycloconverter 102 may apply the drive logic of the positive half-cycle, i.e., the switch Q19 and the switch Q20 may be in the always-on state, the switch Q17 and the switch Q18 may operate complementarily with a duty cycle of 50%, and the dead time may be, for example, Td. When the grid voltage is in the negative half-cycle and not within the threshold range, the cycloconverter 102 may apply the drive logic of the negative half-cycle, i.e., the switch Q17 and the switch Q18 may be in the always-on state, the switch Q19 and the switch Q20 may operate complementarily with a duty cycle of 50%. When the grid voltage is between the two thresholds, i.e., within the threshold range, the drive logic of synchronous switching may be applied. In other words, the controller 103 may control the switch Q17 and the switch Q20 to turn on or off synchronously, and control the switch Q18 and the switch Q19 to turn on or off synchronously, and the two sets of switches may be turned on complementarily.

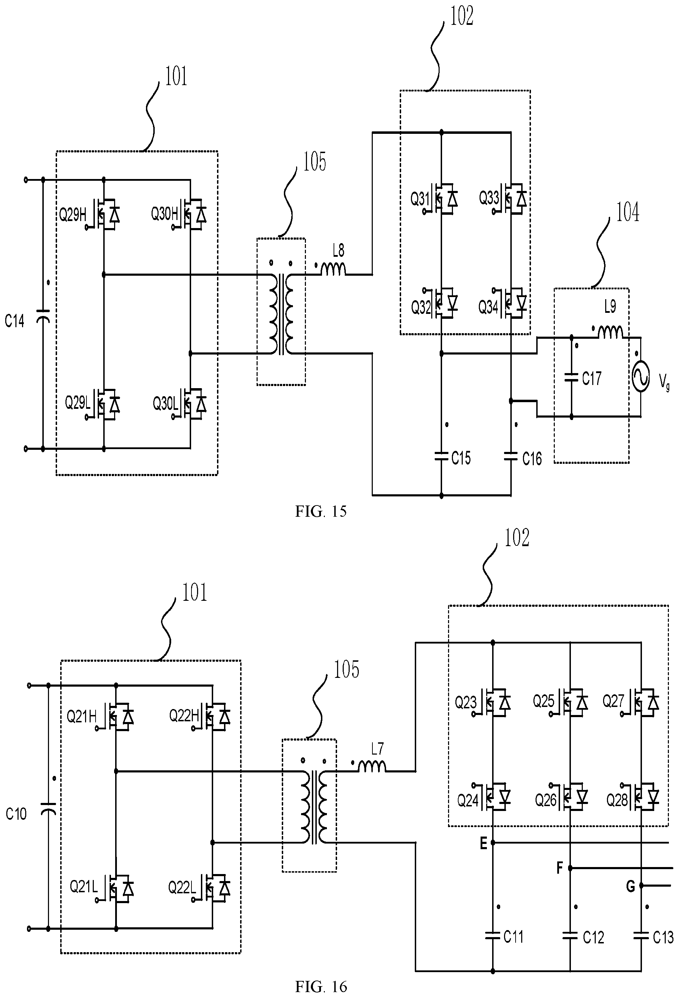

In a fourth embodiment, referring to FIG. 15, an input port of the inverter unit 101 of the DC/AC conversion circuit may be connected to a capacitor C14 in parallel, and the inverter unit 101 may include a switch Q29H, a switch Q29L, a switch Q30H, and a switch Q30L. A cycloconverter 102 may include two sets of switching elements. In each of the two sets of switching elements, the switching elements may be connected in anti-series. Each of the two sets of switching elements may be connected in series with a capacitor. Specifically, the two sets of switching elements may be connected between the two output terminals of the cycloconverter 102 in series to form a bridge arm. A first set of switching elements may include a switch Q31 and a switch Q32 having a common source connection, and a second set of switching elements may include a switch Q33 and a switch Q34 having a common source connection. The first set of switching elements and a capacitor C15 may be connected to a node, and the node may be served as a first output terminal of the cycloconverter 102. The second set of switching elements and a capacitor C16 may be connected to another node, and the another node may be served as a second output terminal of the cycloconverter 102. A terminal of a secondary winding of the transformer 105 may be connected to a middle point of a bridge arm of the cycloconverter 102 via an inductor L8. A resonant unit 106 may be defined by the inductor L8, the capacitor C15, and the capacitor C16. The output port of the cycloconverter 102 may be connected to the alternating current grid Vg via a filter unit 104, and the filter unit 104 may include a capacitor C17 connected to the output port of the cycloconverter 102 in parallel and an inductor L9 connected to a first output terminal of the cycloconverter 102.

When the grid voltage is in the positive half-cycle and not within the threshold range, the cycloconverter 102 may apply the drive logic of the positive half-cycle, i.e., the switch Q31 and the switch Q34 may be in the always-on state, the switch Q32 and the switch Q33 may operate complementarily with a duty cycle of 50%, and the dead time may be, for example, Td. When the grid voltage is in the negative half-cycle and not within the threshold range, the cycloconverter 102 may apply the drive logic of the negative half-cycle, i.e., the switch Q32 and the switch Q33 may be in the always-on state, the switch Q31 and the switch Q34 may operate complementarily with a duty cycle of 50%. When the grid voltage is between the two thresholds, i.e., within the threshold range, the drive logic of synchronous switching may be applied. In other words, the controller 103 may control the switch Q31 and the switch Q32 to turn on or off synchronously, and control the switch Q33 and the switch Q34 to turn on or off synchronously, and the two sets of switches may be turned on complementarily.

In some embodiments, the cycloconverter 102 may include three sets of switching elements, which are configured to provide a three-phase alternating current output. A first set of switching elements may include a first switching element and a second switching element, a second set of switching elements may include a third switching element and a fourth switching element, a third set of switching elements may include a fifth switching element and a sixth switching element, and any two of the three sets of switching elements may be connected in series between corresponding two output terminals of the cycloconverter.

In a fifth embodiment, referring to FIG. 16, an input port of the inverter unit 101 of the DC/AC conversion circuit may be connected to a capacitor C10 in parallel, and the inverter unit 101 may include a switch Q21H, a switch Q21L, a switch Q22H, and a switch Q22L. A cycloconverter 102 may output a three-phase alternating current, and the cycloconverter 102 may include three sets of switching elements. In each of the three sets of switching elements, the switching elements may be connected in anti-series. Each of the three sets of switching elements may be connected to a capacitor. Specifically, any two of the three sets of switching elements may form a bridge arm. A first set of switching elements may include a switch Q23 and a switch Q24 having a common source connection, the first set of switching elements and a capacitor C11 may be connected to a node E, and the node E may be served as a first output terminal of the cycloconverter 102. A second set of switching elements may include a switch Q25 and a switch Q26 having a common source connection, the second set of switching elements and a capacitor C12 may be connected to a node F, and the node F may be served as a second output terminal of the cycloconverter 102. A third set of switching elements may include a switch Q27 and a switch Q28 having a common source connection, the third set of switching elements and a capacitor C13 may be connected to a node G, and the node G may be served as a third output terminal of the cycloconverter 102. A terminal of a secondary winding of the transformer 105 may be connected to a middle point of a bridge arm of the cycloconverter 102 via an inductor L7. The other terminal of the secondary winding of the transformer 105 may be connected to a common point of the capacitor C11, the capacitor C12, and the capacitor C13.

When the grid voltage is in the positive half-cycle and not within the threshold range, the cycloconverter 102 may apply the drive logic of the positive half-cycle. When the grid voltage is in the negative half-cycle and not within the threshold range, the cycloconverter 102 may apply the drive logic of the negative half-cycle. In other words, one switching element in each of the three sets of switching elements may be controlled to be in the always-on state, and the other switching element in the same set of switching elements may be controlled to turn on or off at a high switching frequency. The cycloconverter 102 provides a phase alternating current output between any two output terminals. When a phase voltage corresponding to the first output terminal and the second output terminal is within the threshold range, the switch Q23 and the switch Q24 of the first set of switching elements and the switch Q25 and the switch Q26 of the second set of switching elements may be controlled to complementarily turn on, the switch Q23 and the switch Q24 may be controlled to turn on or off synchronously, and the switch Q25 and the switch Q26 may be controlled to turn on or off synchronously. When a phase voltage corresponding to the first output terminal and the third output terminal is within the threshold range, the switch Q23 and the switch Q24 of the first set of switching elements and the switch Q27 and the switch Q28 of the third set of switching elements may be controlled to complementarily turn on, the switch Q23 and the switch Q24 may be controlled to switch synchronously, and the switch Q27 and the switch Q28 may be controlled to turn on or off synchronously. When a phase voltage corresponding to the second output terminal and the third output terminal is within the threshold range, the switch Q25 and the switch Q26 of the second set of switching elements and the switch Q27 and the switch Q28 of the third set of switching elements may be controlled to complementarily turn on, the switch Q25 and the switch Q26 may be controlled to turn on or off synchronously, and the switch Q27 and the switch Q28 may be controlled to turn on or off synchronously.

It should be noted that the present technical solution is also applicable to a cycloconverter which has more than three phases. The cycloconverter may have the same drive logic, so that details are not described again. In the second embodiment, the third embodiment, the fourth embodiment, and the fifth embodiment, when the grid voltage vg is greater than the threshold +vth, the drive logic of the positive half-cycle may also be applied, when the grid voltage vg is less than the threshold -vth, the drive logic of the negative half-cycle may also be applied, and when the grid voltage vg is within the threshold range [-vth, +vth], the drive logic of synchronous switching may also be applied, so as to achieve the driving of the switch throughout a cycle of the grid voltage.

In an embodiment, a modulation method for a cycloconverter is further provided. The cycloconverter includes a plurality of sets of switching elements, each of the plurality of sets of switching elements includes at least two switching elements which are connected in reverse, an output port of the cycloconverter is configured to connect to a power grid and provide an alternating current output, and the method includes: when a grid voltage is within a threshold range, controlling corresponding two of the plurality of sets of switching elements to complementarily turn on. The threshold range includes a zero crossing.

In an embodiment, the method may further include: when the grid voltage is within the threshold range, controlling the corresponding two of the plurality of sets of switching elements to turn on or off at a high switching frequency.

In an embodiment, the method may further include: when the grid voltage is within the threshold range, controlling switching elements in each of the corresponding two of the plurality of sets of switching elements to turn on or off simultaneously.

In an embodiment, a control method of a DC/AC conversion circuit is further provided and configured to control the DC/AC conversion circuit in the first aspect. The method includes: when the grid voltage is within the threshold range, controlling the corresponding two of the plurality of sets of switching elements to complementarily turn on. The threshold range includes the zero crossing.

In an embodiment, the method may further include: when the grid voltage is within the threshold range, controlling the corresponding two of the plurality of sets of switching elements to turn on or off at a high switching frequency.

In an embodiment, the method may further include: when the grid voltage is within the threshold range, controlling switching elements in each of the corresponding two of the plurality of sets of switching elements to turn on or off simultaneously.

A specific limitation of the method may refer to the foregoing limitation of the circuit, which will not be repeated here.

The various technical features of the above-described embodiments may be combined arbitrarily, and all possible combinations of the various technical features of the above-described embodiments have not been described for the sake of conciseness of description. However, as long as there is no contradiction in the combinations of these technical features, they should be considered to be within the scope of the present description.

The above-described embodiments express only several embodiments of the present invention, which are described in a more specific and detailed manner, but are not to be construed as a limitation on the scope of the present invention. For one skilled in the art, several deformations and improvements can be made without departing from the conception of the present invention, all of which fall within the scope of protection of the present invention. Therefore, the scope of protection of the present invention shall be subject to the attached claims.

## Claims

1. A DC/AC conversion circuit, **characterized by** comprising an inverter unit, at least one cycloconverter, and a controller,
wherein the inverter unit is configured for converting a direct current into an alternating current;
the at least one cycloconverter is connected to the inverter unit, the at least one cycloconverter comprises a plurality of sets of switching elements, the plurality of sets of switching elements are connected to an output port of the inverter unit respectively and configured for performing AC-to-AC conversion, and an output port of the at least one cycloconverter is configured to connect to a power grid and provide an alternating current output, wherein each of the plurality of sets of switching elements comprises at least two switching elements which are connected in reverse; and
the controller is connected to the inverter unit and the at least one cycloconverter and is configured for controlling, when a grid voltage is within a threshold range, corresponding two of the plurality of sets of switching elements to complementarily turn on, wherein the threshold range comprises a zero crossing.

2. The circuit of claim 1, wherein when the grid voltage is within the threshold range, the controller is configured for controlling the corresponding two of the plurality of sets of switching elements to turn on or off at a high switching frequency.

3. The circuit of claim 1, wherein when the grid voltage is within the threshold range, the controller is configured for controlling switching elements in each of the corresponding two of the plurality of sets of switching elements to turn on or off simultaneously.

4. The circuit of claim 1, wherein a dead time is set between any two sets of switching elements.

5. The circuit of claim 1, wherein the controller comprises a hysteresis comparison unit,
the hysteresis comparison unit is configured to compare the grid voltage with a first threshold and a second threshold respectively and control an operating state of the at least one cycloconverter according to a comparison result, wherein the first threshold and the second threshold are determined based on the threshold range.

6. The circuit of claim 1, wherein a set of switching elements of the at least one cycloconverter comprises a first switching element and a second switching element, another set of switching elements of the at least one cycloconverter comprises a third switching element and a fourth switching element, and the first switching element, the second switching element, the third switching element, and the fourth switching element are connected in series between two output terminals of the at least one cycloconverter.

7. The circuit of claim 1, wherein the at least one cycloconverter comprises three sets of switching elements which are configured to provide a three-phase alternating current output, a first set of switching elements comprises a first switching element and a second switching element, a second set of switching elements comprises a third switching element and a fourth switching element, a third set of switching elements comprises a fifth switching element and a sixth switching element, and any two of the three sets of switching elements are connected in series between corresponding two output terminals of the at least one cycloconverter.

8. The circuit of claim 1, wherein each of the plurality of sets of switching elements comprises a first switching element and a second switching element, when the grid voltage is in a positive half-cycle or a negative half-cycle and is not in the threshold range, one of the first switching element and the second switching element is controlled to be in an always-on state, and the other one of the first switching element and the second switching element is controlled to turn on or off at a high switching frequency.

9. The circuit of claim 1, further comprising a transformer, wherein the inverter unit is connected to a primary side of the transformer, and the at least one cycloconverter is connected to a secondary side of the transformer.

10. The circuit of claim 9, further comprising at least one resonant unit connected in series to the secondary side of the transformer, wherein an output terminal of the resonant unit is connected to a corresponding cycloconverter.

11. The circuit of claim 1, further comprising a filter unit, wherein the filter unit is connected to an output port of the at least one cycloconverter and configured to filter the alternating current output of the at least one cycloconverter.

12. A modulation method for a cycloconverter, **characterized in that** the cycloconverter comprises a plurality of sets of switching elements, each of the plurality of sets of switching elements comprises at least two switching elements which are connected in reverse, an output port of the cycloconverter is configured to connect to a power grid and provide an alternating current output, and the method comprises:
when a grid voltage is within a threshold range, controlling corresponding two of the plurality of sets of switching elements to complementarily turn on, wherein the threshold range comprises a zero crossing.

13. The method of claim 12, further comprising: when the grid voltage is within the threshold range, controlling the corresponding two of the plurality of sets of switching elements to turn on or off at a high switching frequency.

14. The method of claim 12, further comprising: when the grid voltage is within the threshold range, controlling switching elements in each of the corresponding two of the plurality of sets of switching elements to turn on or off simultaneously.

15. A control method of a DC/AC conversion circuit, **characterized in that** the method is configured to control the DC/AC conversion circuit of any one of claims 1 to 11, wherein the method comprises:
when the grid voltage is within the threshold range, controlling the corresponding two of the plurality of sets of switching elements to complementarily turn on, wherein the threshold range comprises the zero crossing.

16. The method of claim 15, further comprising: when the grid voltage is within the threshold range, controlling the corresponding two of the plurality of sets of switching elements to turn on or off at a high switching frequency.

17. The method of claim 15, further comprising: when the grid voltage is within the threshold range, controlling switching elements in each of the corresponding two of the plurality of sets of switching elements to turn on or off simultaneously.
